# EUROPEAN PATENT APPLICATION

(11) **EP 2 660 757 A1**
(43) Date of publication of application: **06.11.2013**
(21) Application number: 12764896.2
(22) Date of filing: 23.03.2012
(51) Int. Cl.: G06Q 10/06

(54) **RISK-MANAGEMENT DEVICE**

(30) Priority: 29.03.2011 JP 2011072745
(71) Applicant: NEC Corporation, Tokyo 108-8001 (JP)
(72) Inventor: MORINAGA, Satoshi, Tokyo 108-8001 (JP); IMAMURA, Satoru, Tokyo 105-8574 (JP)
(74) Representative: Sadler, Peter Frederick
(86) International application number: PCT/JP2012/002005
(87) International publication number: WO 2012/132354

(57) **Abstract**

A risk management device includes: a memory for storing risk weighing data and a threshold risk amount, the risk weighing data including a plurality of scenario data each including a combination of a loss event content, loss occurrence frequency and a loss amount; and a processor. The processor is programmed to calculate post-change risk weighing data obtained by changing only loss occurrence frequency or a loss amount of one specific scenario data of the risk weighing data and transmit to a risk weighing device, and repeatedly executing a process of comparing a risk amount received from the risk weighing device with the threshold risk amount while changing a change width of the loss occurrence frequency or the loss amount, thereby performing calculation of an increase rate of the loss occurrence frequency or the loss amount of the specific scenario data such that a risk amount reaches the threshold risk amount.

## Description

### TECHNICAL FIELD

The present invention relates to a risk management device, more specifically, relates to a risk management device having a reverse stress test function for analyzing the factor of increase of a risk amount.

### BACKGROUND ART

In general, company business may face various kinds of operational risk (simply referred to as "risk" hereinafter) such as an earthquake, system trouble, a clerical mistake and fraud. Therefore, it is required to weigh the amount of risk by using a risk weighing device and take measures against the risk.

A risk weighing device inputs therein fragmental information on an unknown risk profile in a company, and weighs a feature value (e.g., 99.9% value at risk (VaR)) of the risk profile in the company from the input data. The data inputted into the risk weighing device generally includes internal loss data and scenario data. Internal loss data is data on a loss event having actually occurred in the company. Internal loss data shows the contents of events and the loss amounts brought by the respective events. However, it is difficult to obtain a necessary and sufficient number of internal loss data with respect to all event contents. Thus, with respect to the content of an event which has rarely occurred and the content of an event which has not occurred yet, the estimation values of the occurrence frequency and loss amount are calculated as scenario data and utilized to weigh a risk amount.

A general risk weighing device weighs VaR by using a method called loss distribution approach (e.g., refer to Patent Document 1 and Non-Patent Document 1). To be specific, firstly, a risk weighing device generates a loss frequency distribution from the number of internal loss data and so on, and generates a loss scale distribution from internal loss data, scenario data and so on. Next, by Monte Carlo simulation, the risk weighing device repeatedly executes a process of taking out loss amounts of the number of losses caused by the abovementioned loss frequency distribution from the loss scale distribution, totaling the loss amounts and calculating a loss mount per holding period ten-thousand or hundred-thousand times, thereby generating a loss amount distribution. Then, the risk weighing device calculates VaR in a predetermined confidence interval from the generated loss amount distribution.

In the field of risk analysis, the necessity for a reverse stress test is advocated. A reverse stress test is to, assuming a specific stress test result (e.g., falling below the regulatory minimum capital requirement, liquidity drain, and insolvency), test what kind of event brings such a result.

Patent Document 1: Japanese Patent Publication No. 4241083

Non-Patent Document 1: Kobayashi, Shimizu, Nishiguchi, and Morinaga, "Operational Risk Management," Kinzai Institute for Financial Affairs, Inc., issued on April 24, 2009, pp. 107-144

Although the necessity for a reverse stress test is advocated in the field of risk analysis as mentioned above, a mechanism for automatically executing a reverse stress test by using a risk weighing device has not been proposed yet. Therefore, it takes much human workload, which is a heavy burden on a risk analyzer.

### SUMMARY

An object of the present invention is to provide a risk management device which solves the aforementioned problem, "execution of a reverse stress test is a heavy burden on a risk analyzer."

A risk management device according to an exemplary embodiment of the present invention includes:
a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data;
a communication interface for performing communication with the risk weighing device; and
a processor connected to the memory and the communication interface,
wherein the processor is programmed to repeat a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

A risk management method according to another exemplary embodiment of the present invention is a risk management method executed by a risk management device including: a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data; a communication interface for performing communication with the risk weighing device; and a processor connected to the memory and the communication interface,
the risk management method including:
by the processor, repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

With the configurations as described above, the present invention can significantly decrease a burden on a risk analyzer in execution of a reverse stress test.

### BRIEF DESCRIPTION OF DRAWINGS

Fig. 1 is a block diagram of a risk management device according to a first exemplary embodiment of the present invention;
Fig. 2 is a view showing an aspect that a risk management device and a risk weighing device are connected via a communication line according to the present invention;
Fig. 3 shows an example of the configuration of risk weighing data in the first exemplary embodiment of the present invention;
Fig. 4 shows an example of the configuration of interim information in the risk management device according to the first exemplary embodiment of the present invention;
Fig. 5 is a flowchart showing a processing example of the first exemplary embodiment of the present invention;
Fig. 6 is a flowchart showing the details of an increase rate calculation process in the first exemplary embodiment of the present invention;
Fig. 7 is a block diagram of a risk management device according to a second exemplary embodiment of the present invention;
Fig. 8 shows an example of the configuration of distribution destination data in the second exemplary embodiment of the present invention;
Fig. 9 shows an example of the configuration of a distribution condition in the second exemplary embodiment of the present invention;
Fig. 10 is a flowchart showing a processing example of the second exemplary embodiment of the present invention;
Fig. 11 shows an example of the configuration of distribution information in the second exemplary embodiment of the present invention;
Fig. 12 is a block diagram of a risk management device according to a third exemplary embodiment of the present invention;
Fig. 13 shows an example of the configuration of a coefficient table used in the third exemplary embodiment of the present invention;
Fig. 14 shows an example of the configuration of interim information in the risk management device according to the third exemplary embodiment of the present invention; and
Fig. 15 is a flowchart showing a processing example of the third exemplary embodiment of the present invention.

### EXEMPLARY EMBODIMENTS

Next, exemplary embodiments of the present invention will be described in detail with reference to the drawings.

### [First Exemplary Embodiment]

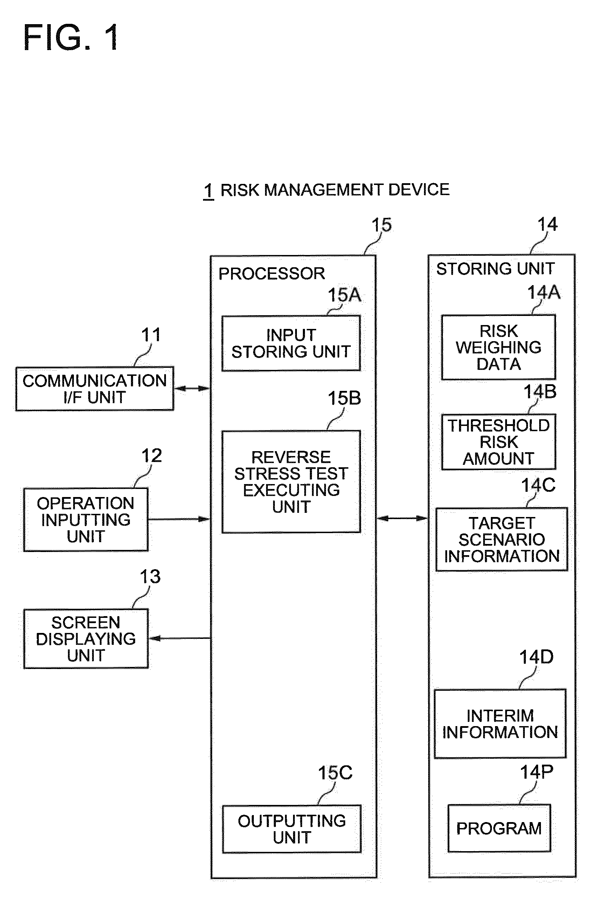

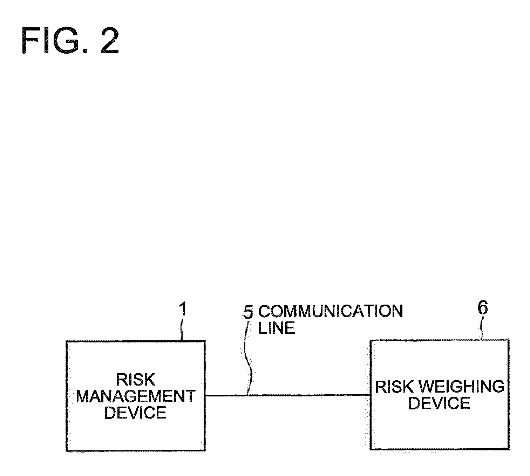

With reference to Fig. 1, a risk management device 1 according to a first exemplary embodiment of the present invention has a function of automatically executing a reverse stress test. Moreover, the risk management device 1 is connected to a risk weighing device 6 via a communication line 5 as shown in Fig. 2. The communication line 5 is configured by a communication cable, a local area network, a wide area network, the Internet, or the like.

Further, the risk management device 1 has, as major function units, a communication interface unit (referred to as a communication I/F unit hereinafter) 11, an operation inputting unit 12, a screen displaying unit 13, a storing unit 14, and a processor 15.

The communication I/F unit 11 is formed by a dedicated data communication circuit, and has a function of performing data communication with a risk weighing device 6 and other devices (not shown in the drawings) connected via a communication line 5.

The operation inputting unit 12 is formed by an operation input device such as a keyboard and a mouse, and has a function of detecting an operation by an operator and outputting to the processor 15.

The screen displaying unit 13 is formed by a screen display device such as an LCD and a PDP, and has a function of displaying various kinds of information such as an operation menu and a calculation result on a screen in accordance with instructions from the processor 15.

The storing unit 14 is formed by a storage device such as a hard disk and a semiconductor memory, and has a function of storing processing information necessary for various kinds of processing by the processor 15 and a program 14P. The program 14P, which is a program loaded into the processor 15 and executed to realize various kinds of processing units, is previously loaded from an external device (not shown) or a computer-readable storage medium (not shown) via a data input/output function such as the communication I/F 11, and is stored into the storing unit 14. Major processing information stored by the storing unit 14 is risk weighing data 14A, a threshold risk amount 14B, target scenario information 14C, and interim information 14D.

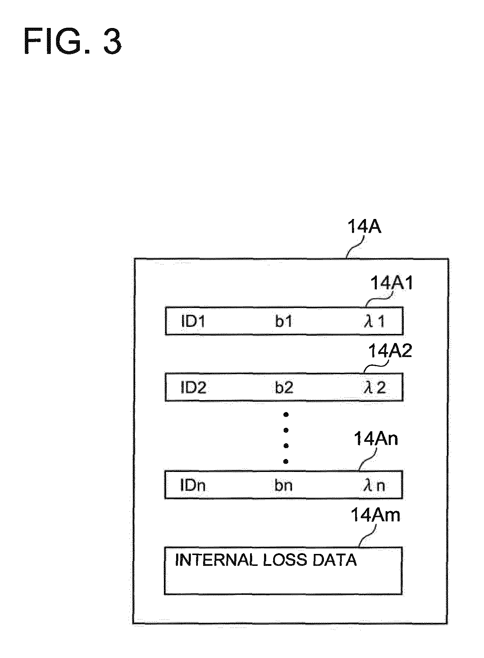

The risk weighing data 14A is data which is an input into the risk weighing device 6. The risk weighing data 14A is composed of a plurality of internal loss data and a plurality of scenario data. Fig. 3 shows an example of the configuration of the risk weighing data 14A. The risk weighing data 14A in this example is composed of a total of n scenario data 14A1 to 14An and a plurality of internal loss data 14Am. Each of the scenario data has an identifier (a scenario ID) for uniquely identifying the scenario data, the amount of loss, and the occurrence frequency of loss. For example, scenario data 14A1 has ID1 as the ID, b1 as the amount of loss, and λ1 as the occurrence frequency of loss. Because the internal loss data 14Am is used in a reverse stress test without changed, a description of the structure of each data will be omitted.

The threshold risk amount 14B is a risk amount that a preset loss amount is added to a risk amount (e.g., 99.9% VaR) weighed by the risk weighing device 6 based on the risk weighing data 14A. For example, assuming that a risk amount weighed by the risk weighing device 6 based on the risk weighing data 14A is 300 billion yen, an amount that 5 billion yen or 10 billion yen is added to the weighed risk amount is the threshold risk amount 14B.

The target scenario information 14C is information designating one or more scenario data to be subjected to a reverse stress test. For example, when all of the n scenario data 14A1 to 14An included in the risk weighing data 14A are targets of change of the loss amounts, the IDs of the scenario data 14A1 to 14An are written in the target scenario information 14C. When only some of the scenario data are targets, the IDs of the scenario data to be subjected to change of the loss amounts are written in the target scenario information 14C.

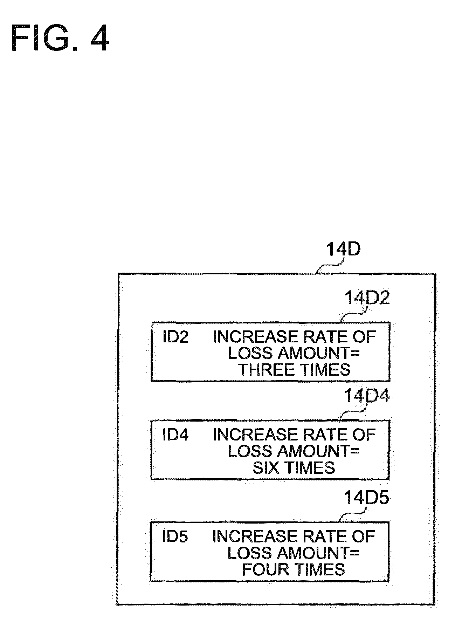

The interim information 14D is interim data or final data generated in the process of operation by the processor 15. Fig. 4 shows an example of the configuration of the interim information 14D. The interim information 14D of this example has reverse stress test results 14D2, 14D4 and 14D5 one-to-one corresponding to the scenario IDs written in the target scenario information 14C. A reverse stress test result 14Di includes IDi of corresponding scenario data 14Ai and the increase rate of the loss amount.

The processor 15 has a microprocessor such as a CPU and a peripheral circuit thereof, and has a function of loading the program 14P from the storing unit 14 and executing to make the hardware and the program 14P work in cooperation and realize various kinds of processing units. Major processing units realized by the processor 15 are an input storing unit 15A, a reverse stress test executing unit 15B, and an outputting unit 15C.

The input storing unit 15A has a function of inputting therein the risk weighing data 14A, the threshold risk amount 14B and the target scenario information 14C from the communication I/F unit 11 or the operation inputting unit 12 and storing into the storing unit 14.

The reverse stress test executing unit 15B has: a function of determining one specific scenario data to be subjected to a test from the scenario data written in the target scenario information 14C; a function of calculating post-change risk weighing data obtained by changing only the loss amount of the specific scenario data 14Ai among the risk weighing data 14A; a function of transmitting the calculated post-change risk weighing data to the risk weighing device 6 via the communication I/F unit 11; a function of receiving a risk amount weighed by the risk weighing device 6 based on the post-change risk weighing data via the communication I/F unit 11; and a function of comparing the received risk amount with the threshold risk amount 14B. Moreover, the reverse stress test executing unit 15B has a function of repeatedly executing processes by the respective functions described above while changing a change amount of the loss amount in specific scenario data, thereby calculating an increase rate of the loss amount of the specific scenario data that a risk amount weighed by the risk weighing device 6 almost reaches the threshold risk amount 14B and storing as a reverse stress test result with respect to the specific scenario data into the storing unit 14C. Furthermore, the reverse stress test executing unit 15B has a function of repeatedly executing the same process as the process executed on the specific scenario data, on the remaining scenario data written in the target scenario information 14C.

The outputting unit 15C has a function of loading the test result by the reverse stress test executing unit 15B from the storing unit 14, and outputting to the screen displaying unit 13 or outputting to the outside via the communication I/F unit 11.

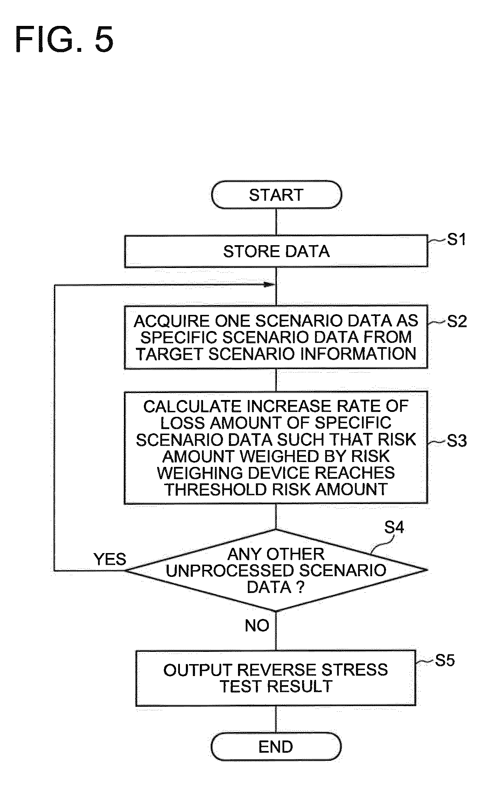

Next, with reference to Fig. 5, an operation of the risk management device 1 according to this exemplary embodiment will be described.

First, the input storing unit 15A inputs therein the risk weighing data 14A, the threshold risk amount 14B and the target scenario information 14C from the communication I/F unit 11 or the operation inputting unit 12, and stores into the storing unit 14 (step S1).

Next, the reverse stress test executing unit 15B acquires one of the scenario data written in the target scenario information 14C as specific scenario data (step S2).

Next, the reverse stress test executing unit 15B calculates an increase rate of the loss amount of the specific scenario data that a risk amount weighed by the risk weighing device 6 almost reaches the threshold risk amount 14B, and stores a reverse stress test result including the calculated increase rate into the storing unit 14 (step S3).

Next, the reverse stress test executing unit 15B determines whether scenario data having not been subjected to the test exist in the target scenario information 14C (step S4). When unprocessed scenario data exist, the reverse stress test executing unit 15B returns to step S2 to acquire one scenario data from the unprocessed scenario data as specific scenario data, and executes the same process as the process executed on the first specific scenario data again. On the other hand, when unprocessed scenario data do not exist, the reverse stress test executing unit 15B transmits control to the outputting unit 15C.

The outputting unit 15C loads the test result by the reverse stress test executing unit 15B from the storing unit 14, and outputs to the screen displaying unit 13 or outputs to the outside via the communication I/F unit 11 (step S5).

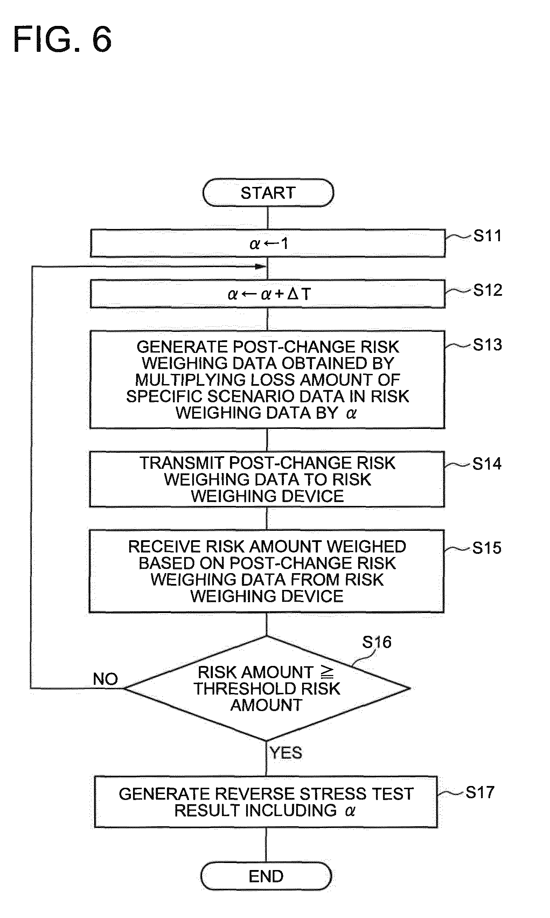

Fig. 6 is a flowchart showing an example of the process at step S3 in Fig. 5. Below, the example of the process at step S3 will be described with reference to Fig. 5.

First, the reverse stress test executing unit 15B resets a variable α defining an increase rate to 1 (step S11). Next, the reverse stress test executing unit 15B increases the variable α by a predetermined unit amount (e.g., 0.1) (step S12).

Next, the reverse stress test executing unit 15B loads the risk weighing data 14A from the storing unit 14, and generates post-change risk weighing data by multiplying the loss amount of the specific scenario data in the risk weighing data 14A by α (step S13). Next, the reverse stress test executing unit 15B transmits the generated post-change risk weighing data to the risk weighing device 6 via the communication I/F unit 11 (step S 14).

The risk weighing device 6 generates a loss frequency distribution and a loss scale distribution with the post-change risk weighing data transmitted from the risk management device 1 as input data, generates a loss amount distribution by Monte Carlo simulation, and calculates VaR in a predetermined confidence interval as a risk amount. Then, the risk weighing device 6 transmits the calculated risk amount to the risk management device 1 via the communication line 5.

When receiving the risk amount from the risk weighing device 6 (step S15), the reverse stress test executing unit 15B compares the received risk amount with the threshold risk amount 14B (step S16). When the risk amount weighed by the risk weighing device 6 is less than the threshold risk amount 14B, the reverse stress test executing unit 15B returns to step S12. Consequently, the variable α defining the increase rate is further increased by the unit amount, and steps S 13 to S 16 are repeated.

When detecting that the risk amount weighed by the risk weighing device 6 is equal to or more than the threshold risk amount 14B, the reverse stress test executing unit 15B generates a reverse stress test result including the value of the variable α at that moment as the increase rate, and stores into the storing unit 14 (step S 17).

In the process shown in Fig. 6, a solution is searched for while the variable α defining the increase rate is increased by the unit amount, but a search algorithm is not limited thereto. For example, a unit amount to increase may be set large initially and, when a risk amount gets close to a threshold risk amount, may be decreased. Moreover, when a risk amount exceeds a threshold risk amount, the variable α may be decreased in accordance with the exceeding amount so that the risk amount converges to the threshold risk amount. Furthermore, a solution may be searched for by not increasing the increase rate but increasing an increase amount by a unit amount.

Accordingly, the risk management device 1 according to this exemplary embodiment has a function of automatically executing a reverse stress test by using the risk weighing device 6, and therefore, can significantly decrease a burden on a risk analyzer executing a reverse stress test.

### [Second Exemplary Embodiment]

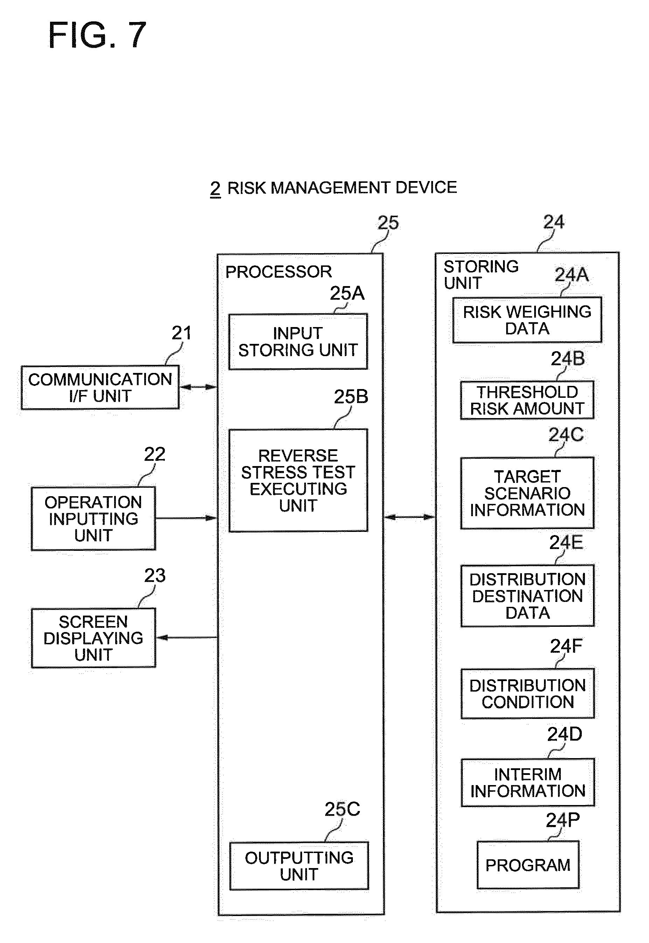

With reference to Fig. 7, a risk management device 2 according to a second exemplary embodiment of the present invention has, in addition to the function of automatically executing a reverse stress test, a function of automatically distributing a reverse stress test result to a relevant distribution destination.

This risk management device 2 has, as major function units, a communication I/F unit 21, an operation inputting unit 22, a screen displaying unit 23, a storing unit 24, and a processor 25.

The communication I/F unit 21, the operation inputting unit 22 and the screen displaying unit 23 have the same functions as the communication I/F unit 11, the operation inputting unit 12 and the screen displaying unit 13 shown in Fig. 1 in the first exemplary embodiment.

The storing unit 24 is formed by a storage device such as a hard disk and a semiconductor memory, and has a function of storing processing information necessary for various kinds of processing by the processor 25 and a program 24P. The program 24P, which is a program loaded into the processor 25 and executed to realize various kinds of processing units, is previously loaded from an external device (not shown) or a computer-readable storage medium (not shown) via a data input/output function such as the communication I/F 21, and is stored into the storing unit 24. Major processing information stored by the storing unit 24 is risk weighing data 24A, a threshold risk amount 24B, target scenario information 24C, interim information 24D, distribution destination data 24E, and a distribution condition 24F.

The risk weighing data 24A, the threshold risk amount 24B, the target scenario information 24C and the interim information 24D are the same as the risk weighing data 14A, the threshold risk amount 14B, the target scenario information 14C and the interim information 14D shown in Fig. 1 in the first exemplary embodiment.

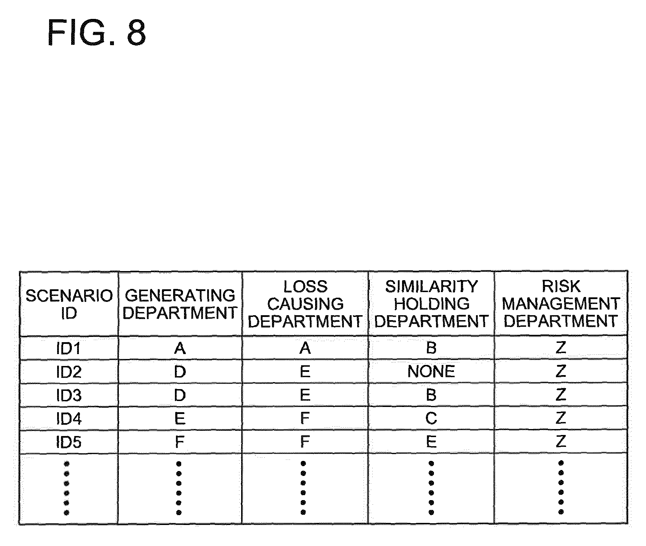

The distribution destination data 24E is information on a distribution destination where a reverse stress test result is distributed. Fig. 8 shows an example of the configuration of the distribution destination data 24E. The distribution destination data 24E of this example is composed of a pair of a scenario ID and distribution destination information. The number of distribution destination information corresponding to one scenario ID is not limited to one and may be plural. In the example shown in Fig. 8, it is possible to designate one, two, three or all of four departments including a generating department, a loss causing department, a similarity holding department and a risk management department, as a distribution destination. For example, distribution destination data on the first line represents that a test result with a scenario ID 1 should be distributed to a department A as the generating department, the department A as the loss causing department, a department B as the similarity holding department that holds a similar scenario to this scenario, and a risk management department Z. Distribution destination data like A described in the field of a distribution destination includes, for example, information specifying a zip code (a postal code) and a receiver when a test result is distributed by post, a mail address when distributed by e-mail, a URL or a visitor ID when distributed by WEB, or information for acquiring them from another place.

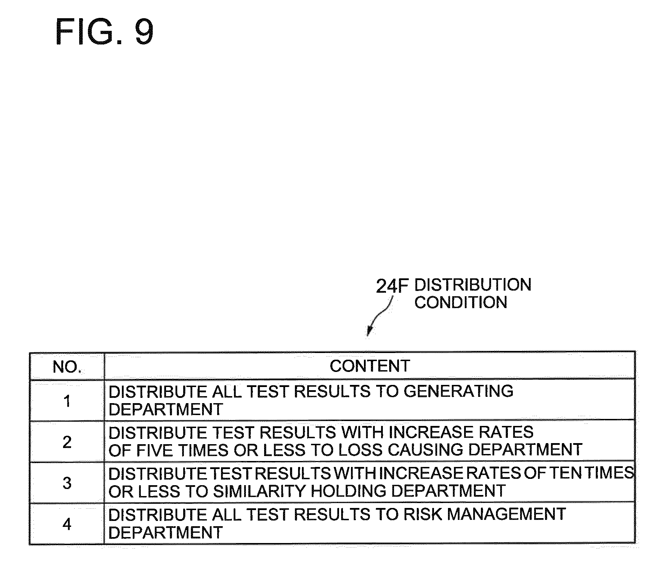

The distribution condition 24F includes conditions for distribution, for example, a place to distribute a reverse stress test result and a condition satisfied by the reverse stress test. Fig. 9 shows an example of the configuration of the distribution condition 24F. The distribution condition 24F of this example includes a total of four distribution conditions No. 1 to No. 4. For example, a distribution condition No. 1 designates a condition that all test results are distributed to a generating department. A distribution condition No. 2 designates a condition that a test result with the increase rate of five times or less is distributed to a loss causing department. The distribution conditions shown in Fig. 9 designate conditions by using distribution destination departments and increase rates, but may designate conditions by using another item such as the type of an event of a scenario.

The processor 25 has a microprocessor such as a CPU and a peripheral circuit thereof, and has a function of loading the program 24P from the storing unit 24 and executing to make the hardware and the program 24P work in cooperation and realize various kinds of processing units. Major processing units realized by the processor 25 are an input storing unit 25A, a reverse stress test executing unit 25B, and an outputting unit 25C.

The input storing unit 25A has a function of inputting therein the risk weighing data 24A, the threshold risk amount 24B, the target scenario information 24C, the distribution destination data 24E and the distribution condition 24F from the communication I/F unit 21 or the operation inputting unit 22 and storing into the storing unit 24.

The reverse stress test executing unit 25B has the same function as the reverse stress test executing unit 15B in the first exemplary embodiment.

The outputting unit 25C has a function of loading the result of a reverse stress test by the reverse stress test executing unit 25B, the distribution destination data 24E and the distribution condition 24F from the storing unit 24, determining a distribution destination of the test result, and distributing the reverse stress test result to the determined distribution destination.

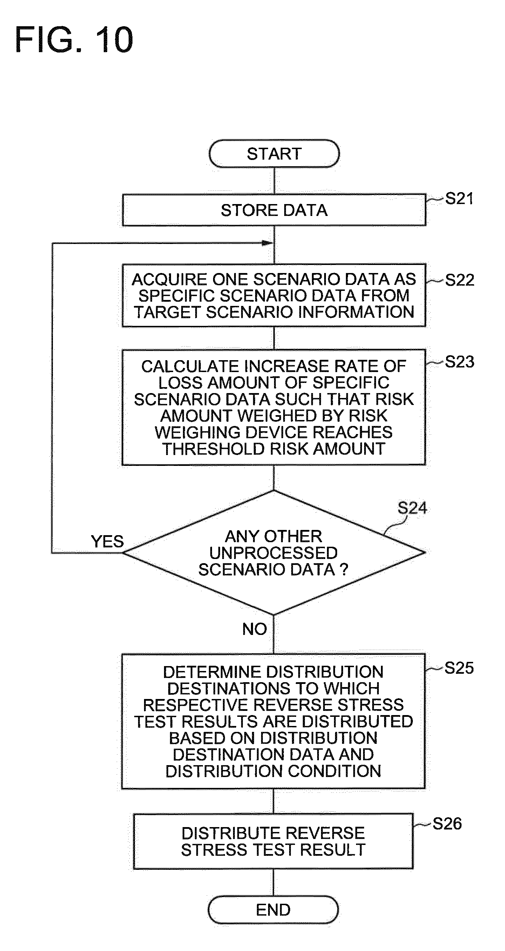

Next, with reference to Fig. 10, an operation of the risk management device 2 according to this exemplary embodiment will be described.

First, the input storing unit 25A inputs therein the risk weighing data 24A, the threshold risk amount 24B, the target scenario information 24C, the distribution destination data 24E and the distribution condition 24F from the communication I/F unit 21 or the operation inputting unit 22, and stores into the storing unit 24 (step S21).

Next, the reverse stress test executing unit 25B acquires one of scenario data written in the target scenario information 24C as specific scenario data (step S22).

Next, the reverse stress test executing unit 25B calculates an increase rate of the loss amount of the specific scenario data that a risk amount weighed by the risk weighing device 6 almost reaches the threshold risk amount 24B, and stores a reverse stress test result including the calculated increase rate into the storing unit 24 (step S23).

Next, the reverse stress test executing unit 25B determines whether scenario data having not been subjected to the test yet exist in the target scenario information 24C (step S24). When unprocessed scenario data exist, the reverse stress test executing unit 25B returns to step S22 to acquire one scenario data as specific scenario data from the unprocessed scenario data, and executes the same process as the process executed on the first specific scenario data again. On the other hand, when unprocessed scenario data do not exist, the reverse stress test executing unit 25B transmits control to the outputting unit 25C.

The outputting unit 25C loads the result of the test by the reverse stress test executing unit 25B, the distribution destination data 24E and the distribution condition 24F from the storing unit 24, analyzes the loaded contents, and determines distribution destinations to which the respective reverse stress test results are distributed (step S25). Next, based on the determined contents, the outputting unit 25C distributes the reverse stress test result to the distribution destination via the communication I/F unit 21 (step S26).

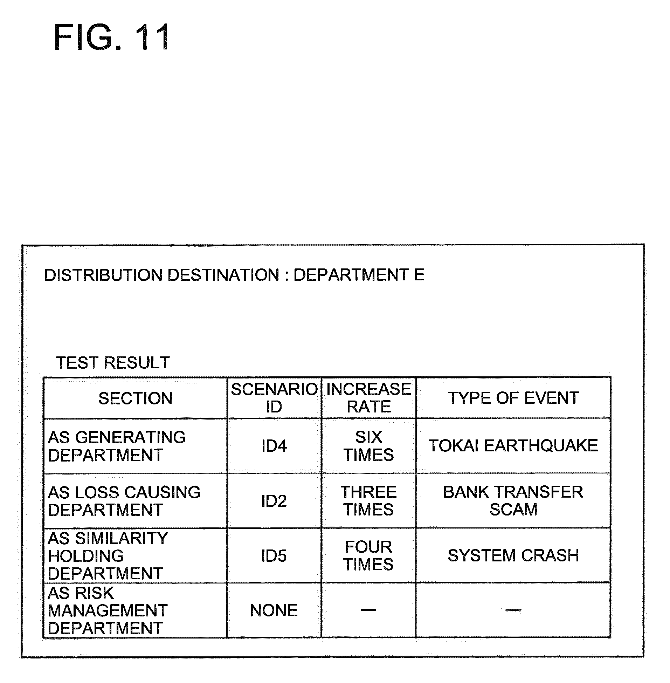

When distributing, the outputting unit 25C may organize and format distributed information for every distribution destination. For example, the outputting unit 25C may distinguish, for every department as a distribution destination, a plurality of reverse stress test results distributed to the department based on what section each of the test results has been sent among the generating department, the loss causing department, the similarity holding department and the risk management department, or may sort the test results depending on the magnitude of the increase rates in each of the sections. Moreover, in a case that an event content (e.g., Tokai Earthquake, a system crash, etc.) is written in each scenario data of the risk weighing data, the outputting unit 25C may extract an event content from scenario data corresponding to a scenario ID of a test result and add to the test result as auxiliary information. For example, in a case that a reverse stress test result as shown in Fig. 4 is calculated and the distribution destination data 24E and the distribution condition 24F are as shown in Figs. 8 and 9, test results with scenario ID2, ID4 and ID5 are distributed to a department E. At this moment, for example, distribution information may be processed into a format as shown in Fig. 11 and distributed.

Because the risk management device 2 according to this exemplary embodiment thus has the function of automatically executing a reverse stress test by using the risk weighing device 6, and also has the function of automatically distributing the test result to a relevant distribution destination, it is possible to further reduce a burden on a risk analyzer at the time of executing a reverse stress test.

### [Third Exemplary Embodiment]

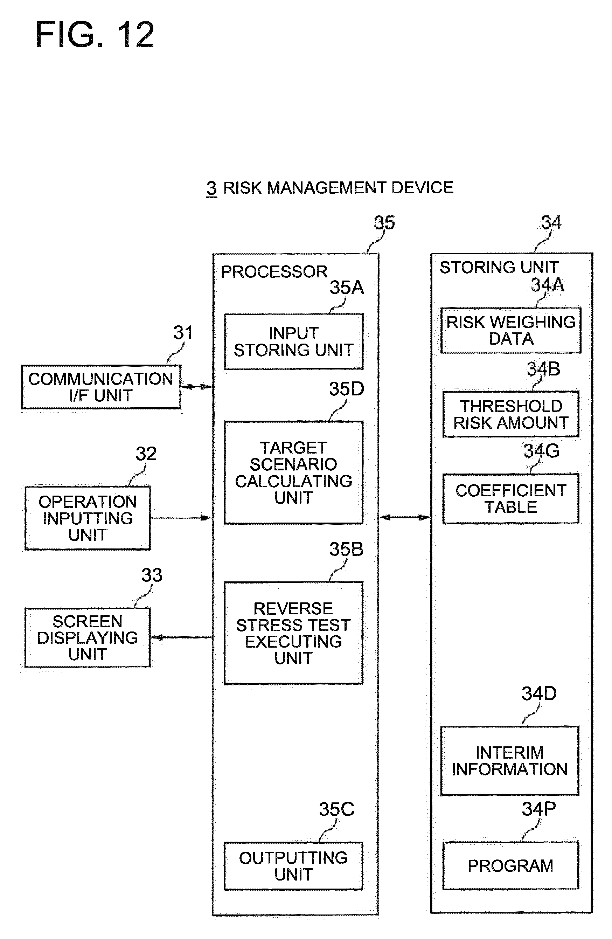

With reference to Fig. 12, a risk management device 3 according to a third exemplary embodiment of the present invention has a function of automatically determining a scenario to be subjected to a reverse stress test and executing the reverse stress test.

This risk management device 3 has a communication I/F unit 31, an operation inputting unit 32, a screen displaying unit 33, a storing unit 34, and a processor 35, as major function units.

The communication I/F unit 31, the operation inputting unit 32 and the screen displaying unit 33 have the same functions as the communication I/F unit 11, the operation inputting unit 12 and the screen displaying unit 13 shown in Fig. 1 in the first exemplary embodiment.

The storing unit 34 is formed by a storage device such as a hard disk and a semiconductor memory, and has a function of storing processing information necessary for various kinds of processing by the processor 35 and a program 34P. The program 34P, which is a program loaded into the processor 35 and executed to realize various kinds of processing units, is previously loaded from an external device (not shown) or a computer-readable storage medium (not shown) via a data input/output function such as the communication I/F 31, and is stored into the storing unit 34. Major processing information stored by the storing unit 34 is risk weighing data 34A, a threshold risk amount 34B, interim information 34D, and a coefficient table 34G.

The risk weighing data 34A and the threshold risk amount 34B are the same as the risk weighing data 14A and the threshold risk amount 14B shown in Fig. 1 in the first exemplary embodiment.

The coefficient table 34G is a table used for performing an approximate calculation of a VaR amount in a predetermined confidence interval α for each scenario data. In this specification, a total loss amount per holding period based on one specific scenario data is referred to as an individual data VaR amount of the scenario data. As a confidence interval, for example, 99.9% is used. In this exemplary embodiment, individual data VaR amounts are calculated for the respective scenario data included in the risk weighing data 34A, and scenario data with an individual data VaR amount of a predetermined standard amount or more is subjected to a reverse stress test as an important scenario. The coefficient table 34G holds, in association with each loss occurrence frequency, a coefficient which is equal to the value of the number of occurrences at a lower α% point in a cumulative distribution function of a probability distribution with the loss occurrence frequency as a parameter. The abovementioned probability distribution is the same as a probability distribution used for estimation of a frequency distribution in a general risk weighing device. For example, when a Poisson distribution is used in a general risk weighing device, the abovementioned probability distribution is a Poisson distribution. Because a cumulative distribution function of a Poisson distribution is discontinuous, it is desirable to extend the factorial of integers to the factorial of real numbers by using a gamma function, smooth a cumulative distribution function of a Poisson distribution, and obtain a coefficient which is equal to the value of the number of occurrences at a lower α% point.

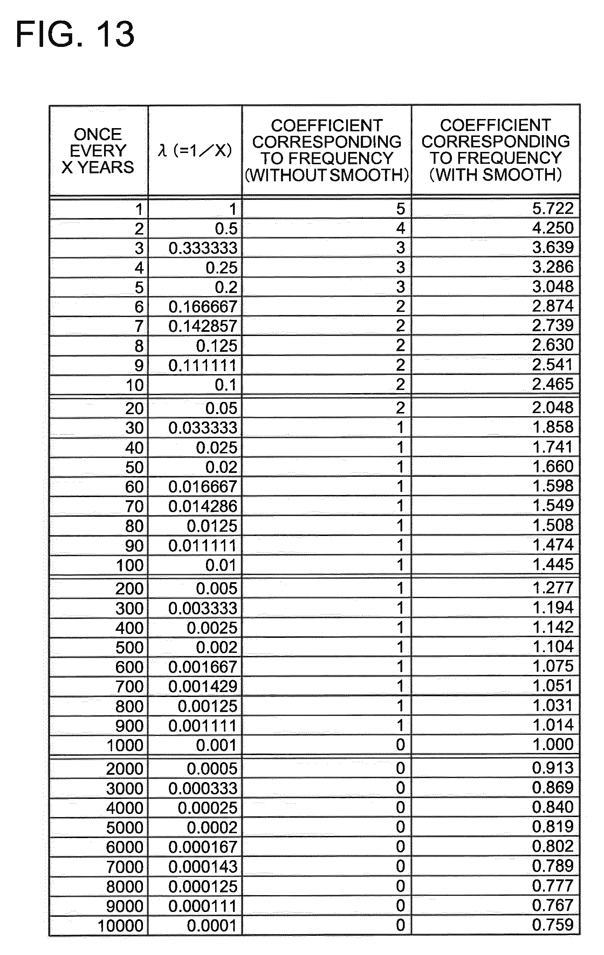

Fig. 13 is an example of the configuration of the coefficient table 14B. Although the coefficient table of this example includes loss occurrence frequency in two forms, that is, every how many years loss occurs once and how many times loss occurs in one year, a coefficient table may include only one of the forms and the other can be omitted as far as the form of loss occurrence frequency in loss data is uniform. Moreover, although the coefficient table of this example includes coefficients corresponding to loss occurrence frequency in two forms, namely, without smooth and with smooth, a coefficient table may include only one of the forms. For example, when without-smooth coefficients are not used, it is sufficient to table only with-smooth coefficients.

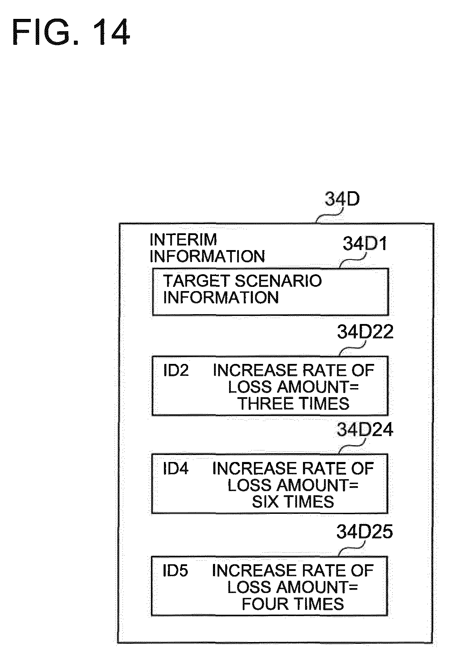

The interim information 34D is interim data or final data generated in the process of operation by the processor 35. Fig. 14 shows an example of the configuration of the interim information 34D. The interim information 34D of this example has target scenario information 34D1 that is a list of IDs of scenario data to be subjected to a reverse stress test, and reverse stress test results 34D22, 34D24 and 34D25 one-to-one corresponding to the scenario IDs written in the target scenario information 34D1. A reverse stress test result 34D2i includes IDi of corresponding scenario data 34Ai and the increase rate of a loss amount.

The processor 35 has a microprocessor such as a CPU and a peripheral circuit thereof, and has a function of loading the program 34P from the storing unit 34 and executing to make the hardware and the program 34P work in cooperation and realize various kinds of processing units. Major processing units realized by the processor 35 are an input storing unit 35A, a reverse stress test executing unit 35B, an outputting unit 35C, and a target scenario calculating unit 35D.

The input storing unit 34A has a function of inputting therein the risk weighing data 34A, the threshold risk amount 34B and the coefficient table 34G from the communication I/F unit 31 or the operation inputting unit 32, and storing into the storing unit 34.

The target scenario calculating unit 35D has a function of: loading the risk weighing data 34A and the coefficient table 34G from the storing unit 34; for each of the scenario data included in the risk weighing data 34A, calculating the product of a coefficient held in the coefficient table 34G in association with loss occurrence frequency included in the scenario data and a loss amount included in the scenario data as an individual data VaR amount; and determining scenario data that the calculated individual data VaR amount is equal to or more than a standard value as a reverse stress test target. Moreover, the target scenario calculating unit 35D has a function of generating a list of the IDs of the scenario data determined as reverse stress test targets as the target scenario information 34D1, and storing into the storing unit 34.

The reverse stress test executing unit 35B and the outputting unit 35C have the same functions as the reverse stress test executing unit 15B and the outputting unit 15C in the first exemplary embodiment.

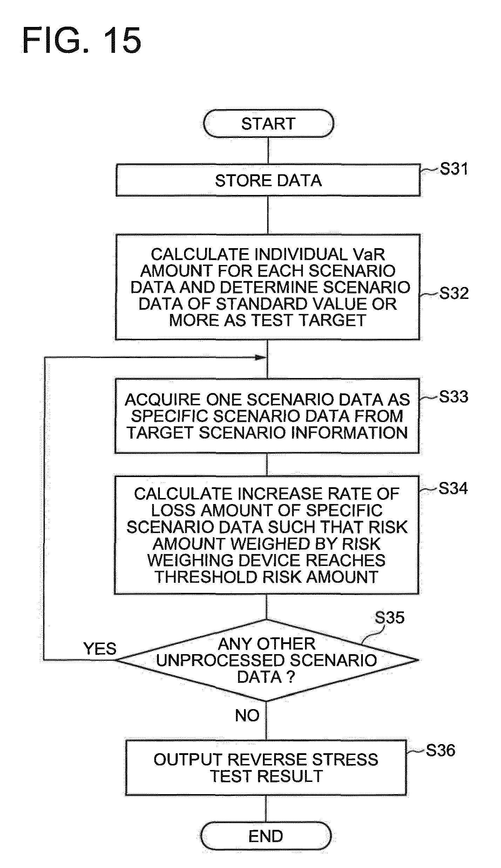

Next, with reference to Fig. 15, an operation of the risk management device 3 according to this exemplary embodiment will be described.

First, the input storing unit 35A inputs therein the risk weighing data 34A, the threshold risk amount 24B and the coefficient table 34G from the communication I/F unit 31 or the operation inputting unit 32, and stores into the storing unit 34 (step S31).

Next, the target scenario calculating unit 35D calculates, for each of the scenario data included in the risk weighing data 34A, the product of a coefficient held in the coefficient table 34G in association with loss occurrence frequency included in the scenario data and a loss amount included in the scenario data as an individual data VaR amount, determines scenario data that the calculated individual data VaR amount is equal to or more than a standard value as a reverse stress test target, and writes the ID of the scenario data into the target scenario information 34D1 (step S32).

Because subsequent steps S33 to S36 are the same as steps S2 to S5 in Fig. 5 showing the operation of the first exemplary embodiment, a description thereof will be omitted.

Thus, because the risk management device 3 of this exemplary embodiment has a function of automatically determining a scenario to be subjected to a reverse stress test and executing the reverse stress test thereon, it is possible to more significantly decrease a burden on a risk analyzer executing a reverse stress test.

Further, because scenario data that an individual data VaR amount is equal to or more than a standard value is the target of a reverse stress test, it is possible to eliminate wasteful execution of a reverse stress test that the probability of actual occurrence is almost zero, such that the increase rate of a loss amount for exceeding the threshold risk amount 34B becomes dozens of times to hundreds of times.

Further, because an individual data VaR amount is approximately calculated by using the coefficient table 34G, it is possible to significantly reduce a necessary calculation amount and a necessary calculation time as compared with calculating an amount corresponding to an individual data VaR amount by using a general risk weighing device.

In this exemplary embodiment, scenario data that an individual data VaR amount is equal to or more than a standard value is the target of a reverse stress test. However, a method for determining the target of a reverse stress test by using an individual data VaR amount is not limited to the abovementioned method. For example, in the case of sorting scenario data in the decreasing order of individual data VaR amounts and providing a risk weighing device with the top n scenario data and all internal loss data as input data, it is possible to obtain the minimum value of n such that the risk amount of the risk weighing device exceeds a predetermined ratio (e.g., 80%) of a risk amount based on all of the scenario data and all of the internal loss data, and determine the n scenario data as test targets. Alternatively, it is possible to determine a scenario such that a VaR amount increases by a predetermined amount (e.g., 10 billion yen) but an increase rate is only a predetermined rate (e.g., ten times) or less, as a test target.

Although the present invention has been described above with the exemplary embodiments, the present invention is not limited to the exemplary embodiments and can be modified in various manners. For example, in the exemplary embodiments described above, the loss amount of scenario data is changed, but the loss occurrence frequency is not changed. However, the present invention is not limited thereto, and a test may be performed by changing the loss occurrence frequency of scenario data without changing the loss occurrence amount, or by changing both the loss occurrence frequency and the loss occurrence amount. Moreover, the present invention can also be applied to risk other than operational risk, such as credit risk relating to margin trading such as load service and market risk relating to exchange trading and interest trading.

The present invention is based upon and claims the benefit of priority from Japanese patent application No. 2011-072745, filed on March 29, 2011, the disclosure of which is incorporated herein in its entirety by reference.

### INDUSTRIAL APPLICABILITY

The present invention can be utilized in a reverse stress test for analyzing the factor of increase of a risk amount, for example.

The whole or part of the exemplary embodiments disclosed above can be described as, but not limited to, the following supplementary notes.

### (Supplementary Note 1)

A risk management device, comprising:
a storing means for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data;
a communication means for performing communication with the risk weighing device; and
a reverse stress test executing means for repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

### (Supplementary Note 2)

The risk management device according to Supplementary Note 1, wherein the reverse stress test executing means is configured to change the one specific scenario data to other scenario data and repeat the calculation of the increase rate.

### (Supplementary Note 3)

The risk management device according to Supplementary Note 1 or 2, wherein the storing means is configured to store distribution destination information,
the risk management device further comprising an outputting means for notifying a reverse stress test result including the increase rate calculated with respect to the specific scenario data to a distribution destination specified by the distribution destination information.

### (Supplementary Note 4)

The risk management device according to Supplementary Note 1 or 2, wherein the storing means is configured to store distribution destination information and a distribution condition,
the risk management device further comprising an outputting means for determining a distribution destination of a reverse stress test result including the increase rate calculated with respect to the specific scenario data based on the distribution destination information and the distribution condition, and notifying the reverse stress test result to the determined distribution destination.

### (Supplementary Note 5)

The risk management device according to any of Supplementary Notes 1 to 4, wherein:
the storing means is configured to store target scenario information showing one or more scenario data subjected to change of the loss occurrence frequency or the loss amount; and
the reverse stress test executing means is configured to select the specific scenario data from the scenario data designated in the target scenario information.

### (Supplementary Note 6)

The risk management device, wherein the storing means is configured to store a coefficient table holding, in association with the loss occurrence frequency, a coefficient equal to a value of a number of occurrences at a lower α% point (α is a predetermined constant) in a cumulative distribution function of a probability distribution with the loss occurrence frequency as a parameter,
the risk management device further comprising a target scenario calculating means for, for each of the scenario data included in the risk weighing data, calculating a product of a coefficient held in the coefficient table in association with loss occurrence frequency included in the scenario data and a loss amount included in the scenario data as an individual data VaR amount, generating information showing all or part of scenario data that the calculated individual data VaR amount is equal to or more than a standard value as the target scenario information, and storing into the memory.

### (Supplementary Note 7)

A risk management method executed by a risk management device including: a storing means for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data; a communication interface for performing communication with the risk weighing device; and a reverse stress test executing means connected to the memory and the communication interface,
the risk management method comprising:
by the reverse stress test executing means, repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

### (Supplementary Note 8)

A computer program comprising instructions for causing a computer, which has a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data and which has a communication interface for performing communication with the risk weighing device, to function as:
a reverse stress test executing means for repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

### DESCRIPTION OF REFERENCE NUMERALS

- 1, 2, 3: risk management device
- 11, 21, 31: communication I/F unit
- 12, 22, 32: operation inputting unit
- 13, 23, 33: screen displaying unit
- 14, 24, 34: storing unit
- 15, 25, 35: processor

## Claims

1. A risk management device, comprising:
a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data;
a communication interface for performing communication with the risk weighing device; and
a processor connected to the memory and the communication interface,
wherein the processor is programmed to repeat a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

2. The risk management device according to Claim 1, wherein the processor is further programmed to change the one specific scenario data to other scenario data and repeat the calculation of the increase rate.

3. The risk management device according to Claim 1 or 2, wherein:
the memory is further configured to store distribution destination information; and
the processor is further programmed to notify a reverse stress test result including the increase rate calculated with respect to the specific scenario data to a distribution destination specified by the distribution destination information.

4. The risk management device according to Claim 1 or 2, wherein:
the memory is further configured to store distribution destination information and a distribution condition; and
the processor is further programmed to determine a distribution destination of a reverse stress test result including the increase rate calculated with respect to the specific scenario data based on the distribution destination information and the distribution condition, and notify the reverse stress test result to the determined distribution destination.

5. The risk management device according to any of Claims 1 to 4, wherein:
the memory is further configured to store target scenario information showing one or more scenario data subjected to change of the loss occurrence frequency or the loss amount; and
the processor is further programmed to select the specific scenario data from the scenario data designated in the target scenario information.

6. The risk management device according to any of Claims 1 to 5, wherein:
the memory is further configured to store a coefficient table holding, in association with the loss occurrence frequency, a coefficient equal to a value of a number of occurrences at a lower α% point (α is a predetermined constant) in a cumulative distribution function of a probability distribution with the loss occurrence frequency as a parameter; and
the processor is further programmed to, for each of the scenario data included in the risk weighing data, calculate a product of a coefficient held in the coefficient table in association with loss occurrence frequency included in the scenario data and a loss amount included in the scenario data as an individual data VaR amount, generate information showing all or part of scenario data that the calculated individual data VaR amount is equal to or more than a standard value as the target scenario information, and store into the memory.

7. A risk management method executed by a risk management device including: a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data; a communication interface for performing communication with the risk weighing device; and a processor connected to the memory and the communication interface,
the risk management method comprising:
by the processor, repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.

8. The risk management method according to Claim 7, further comprising:
by the processor, changing the one specific scenario data to other scenario data and repeating the calculation of the increase rate.

9. The risk management method according to Claim 7 or 8, further comprising:
by the memory, storing distribution destination information; and
by the processor, notifying a reverse stress test result including the increase rate calculated with respect to the specific scenario data to a distribution destination specified by the distribution destination information.

10. The risk management method according to Claim 7 or 8, further comprising:
by the memory, storing distribution destination information and a distribution condition; and
by the processor, determining a distribution destination of a reverse stress test result including the increase rate calculated with respect to the specific scenario data based on the distribution destination information and the distribution condition, and notifying the reverse stress test result to the determined distribution destination.

11. The risk management method according to any of Claims 7 to 10, further comprising:
by the memory, storing target scenario information showing one or more scenario data subjected to change of the loss occurrence frequency or the loss amount; and
by the processor, selecting the specific scenario data from the scenario data designated in the target scenario information.

12. The risk management method according to any of Claims 7 to 11, further comprising:
by the memory, storing a coefficient table holding, in association with the loss occurrence frequency, a coefficient equal to a value of a number of occurrences at a lower α% point (α is a predetermined constant) in a cumulative distribution function of a probability distribution with the loss occurrence frequency as a parameter; and
by the processor, for each of the scenario data included in the risk weighing data, calculating a product of a coefficient held in the coefficient table in association with loss occurrence frequency included in the scenario data and a loss amount included in the scenario data as an individual data VaR amount, generating information showing all or part of scenario data that the calculated individual data VaR amount is equal to or more than a standard value as the target scenario information, and storing into the memory.

13. A computer program comprising instructions for causing a processor, which is connected to a memory for storing risk weighing data and a threshold risk amount, the risk weighing data including a plurality of scenario data each including a combination of a loss event content, loss occurrence frequency and a loss amount, and the threshold risk amount being set to a larger value than a risk amount weighed by a risk weighing device weighing the risk amount based on the risk weighing data and which is connected to a communication interface for performing communication with the risk weighing device, to perform operations including:
repeating a process of calculating post-change risk weighing data obtained by changing only loss occurrence frequency or a loss amount of one specific scenario data of the risk weighing data, transmitting to the risk weighing device and comparing a risk amount received from the risk weighing device with the threshold risk amount, while changing a change width of the loss occurrence frequency or the loss amount, thereby performing calculation of an increase rate of the loss occurrence frequency or the loss amount of the specific scenario data such that a risk amount weighed by the risk weighing device reaches the threshold risk amount.
